# EUROPEAN PATENT APPLICATION

(11) **EP 4 625 241 A1**
(43) Date of publication of application: **01.10.2025**
(21) Application number: 25152944.2
(22) Date of filing: 20.01.2025
(51) Int. Cl.: G06F 40/289, G06F 40/30, G06F 40/40, G06N 20/00, G06Q 50/40, G06F 40/279

(54) **AIRLINE EVALUATION FEEDBACK RECOMMENDATION AND FINDING MAPPING USING ARTIFICIAL INTELLIGENCE**

(30) Priority: 25.03.2024 US 202418615385
(71) Applicant: The Boeing Company, Arlington, VA 22202 (US)
(72) Inventor: BISWAL, Sushanta Kumar, Arlington, 22202 (US); RAY, Abhik, Arlington, 22202 (US); GUPTA, Yamini, Arlington, 22202 (US); SCHWAN, Mel Eric, Arlington, 22202 (US)
(74) Representative: Bryn-Jacobsen, Caelia

(57) **Abstract**

Airline evaluation, comment recommendation, and finding prediction mapping are provided. Responsive to a first user partial entry in an evaluation category entry field, a first large language model (LLM) provides prompts of suggested categories. Selection of one of the prompts or user entry of an alternative category is received. Responsive to a partial entry of a task description, the first LLM provides prompts of suggested task descriptions. Selection of one of the prompts or user input of an alternative task description is received. Responsive to a partial entry of a comment, the first LLM provides prompts comprising subsets of words of suggested comments. Selection of one the prompts or input of an alternate comment is then received. A second LLM provides predicted findings based on the evaluation category, task description, and comment. Selection of one of the predicted findings or user input of an alternative finding is then received.

## Description

### BACKGROUND INFORMATION

### Technical Field:

The present disclosure relates generally to artificial intelligence systems, and more specifically to large language models for recommending and mapping user input regarding results of airline operational evaluations.

### Background:

Airline Operational Safety Support (AOSS) is an initiative to enhance Operator's Efficacy to identify and appraise operator preparedness for continued safe airplane operations. Under this initiative, working together with individual airlines, an evaluation is performed against an airline's own processes, procedures, and programs. This assesses an airline's capabilities to continuously operate and maintain a fleet of airplanes in a safe level of efficacy and airworthiness and identify an Operator's individual needs to further increase its performance.

As part of this process, a safety team defines their Comments for individual Items based on Evaluation Checklist Description, rating, etc. These comments are prolonged description on understanding and observation of Safety Team pilots on: Operator's efficiency, Airline's processes, Procedures & Safety Risks. Comments are further used to identify the type of Finding (Hazard) that can occur in the near future if no corrective action is taken. Finding categorization helps AOSS teams in identifying root cause of safety issue and mitigation plan.

### SUMMARY

An illustrative example provides a computer-implemented method for airline evaluation, comment recommendation, and finding prediction mapping. The method comprises responsive to a first user partial entry in an evaluation category entry field, providing, by a first large language model, a first number of prompts of a suggested evaluation category based on a number of predefined evaluation categories. Selection of one of the first number of prompts or user entry of an alternative evaluation category is received. Responsive to a second user partial entry in a task description entry field, the first large language model provides a second number of prompts of a suggested full task description based on historical contents related to the evaluation category. Selection of one of the second number of prompts or user input of an alternative full task description is received. Responsive to a third user partial entry in a comments entry field, the first large language model, provides third prompts comprising initial subsets of words of suggested comments based on historical contents related to the task description. Selection of one of the third prompts or user input of an alternate comment is then received. A second large language model provides a number of predicted findings based on the evaluation category, task description, and comment. Selection of one of the predicted findings or user input of an alternative finding is received.

Another illustrative examples provides a system for airline evaluation, comment recommendation, and finding prediction mapping. The system comprises a storage device that stores program instructions and one or more processors operably connected to the storage device and configured to execute the program instructions to cause the system to: responsive to a first user partial entry in an evaluation category entry field, provide, by a first large language model, a first number of prompts of a suggested evaluation category based on a number of predefined evaluation categories; receive selection of one of the first number of prompts or user entry of an alternative evaluation category; responsive to a second user partial entry in a task description entry field, provide, by the first large language model, a second number of prompts of a suggested full task description based on historical contents related to the evaluation category; receive selection of one of the second number of prompts or user input of an alternative full task description; responsive to a third user partial entry in a comments entry field, provide, by the first large language model, third prompts comprising initial subsets of words of suggested comments based on historical contents related to the task description; provide, by a second large language model, a number of predicted findings based on the evaluation category, task description, and comment; and receive selection of one of the predicted findings or user input of an alternative finding.

Another illustrative examples provides a computer program product for airline evaluation, comment recommendation, and finding prediction mapping. The computer program product comprises a computer-readable storage medium having program instructions embodied thereon to perform the operations of: responsive to a first user partial entry in an evaluation category entry field, providing, by a first large language model, a first number of prompts of a suggested evaluation category based on a number of predefined evaluation categories; receiving selection of one of the first number of prompts or user entry of an alternative evaluation category; responsive to a second user partial entry in a task description entry field, providing, by the first large language model, a second number of prompts of a suggested full task description based on historical contents related to the evaluation category; receiving selection of one of the second number of prompts or user input of an alternative full task description; responsive to a third user partial entry in a comments entry field, providing, by the first large language model, third prompts comprising initial subsets of words of suggested comments based on historical contents related to the task description; receiving selection of one of the third prompts or user input of an alternate comment; providing, by a second large language model, a number of predicted findings based on the evaluation category, task description, and comment; and receiving selection of one of the predicted findings or user input of an alternative finding.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** depicts a block diagram of an airline evaluation system in accordance with an illustrative example;
**Figure 2** depicts a diagram illustrating an artificial intelligence architecture evaluation comment recommendation in accordance with an illustrative example;
**Figure 3** depicts a diagram illustrating a comment recommendation engine in accordance with an illustrative example;
**Figures 4A** depicts an illustration of a user interface with a blank comments field in accordance with an illustrative example;
**Figures 4B** depicts an illustration of a User Interface with a partial comments entry and suggested comments in accordance with an illustrative example;
**Figures 4C** depicts an illustration of a User Interface with suggested findings in response to an entered comment in accordance with an illustrative example;
**Figure 5** depicts a flowchart illustrating a process for airline evaluation, comment recommendation, and finding prediction mapping in accordance with an illustrative example; and
**Figure 6** is an illustration of a block diagram of a data processing system in accordance with an illustrative example.

### DETAILED DESCRIPTION

The illustrative examples recognize and take into account that information collected by safety team members write down the comments/comments manually in excel sheets, which is approximately 50-60 words in average for each feedback. For each observation item, it takes approximately 2-4 mins of their time, and there is some probability of occurrences of human errors like spelling mistakes or punctuation errors, chance of missing feedback, etc.

The illustrative examples also recognize and take into account that once the comment/comments is manually entered for all observations the AOSS teams start reading observations, their comments, and start writing Finding (Hazard) type for each observation. This is a manual activity, and there is also a chance of mapping a non-standardized Finding. It takes a large amount of time to map approximately 400 observations.

The illustrative examples provide an artificial intelligence system that uses a trained GPT algorithm to anticipate and prompt suggested comments/comments phrasing in response to user entry of initial words in an interface. This algorithm is trained on historical data observations and learns patterns from the historical data and finds relationships among words/token present in aviation safety data. A second GPT algorithm is trained to map comments/comments to findings/potential harms based on historical.

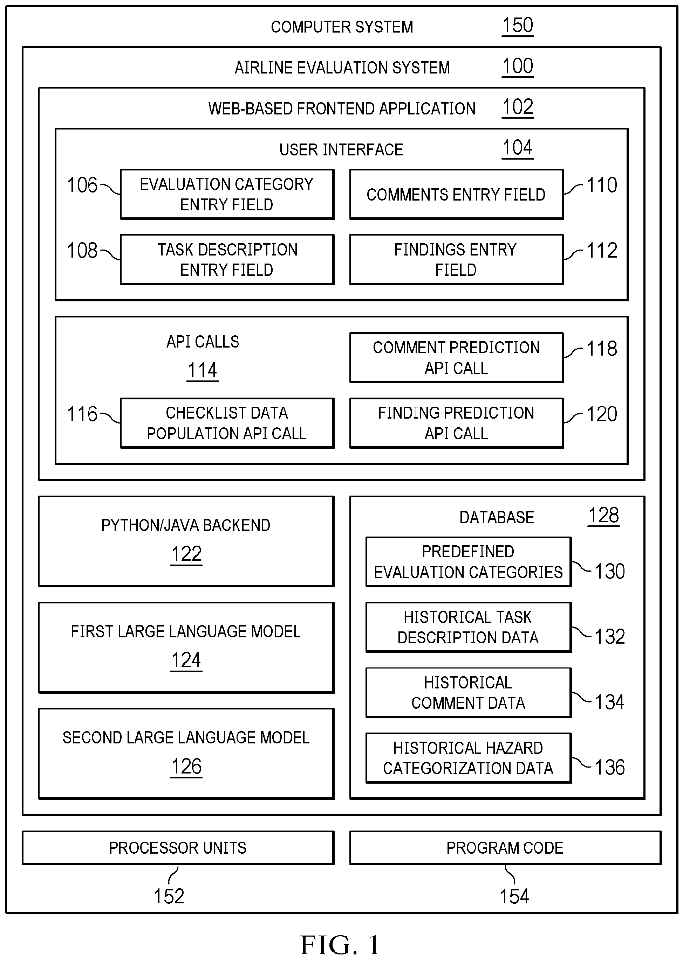

**Figure 1** is a block diagram of an airline evaluation system depicted in accordance with an illustrative example. Airline evaluation system **100** comprises a web-based frontend application **102** with a user interface **104.**

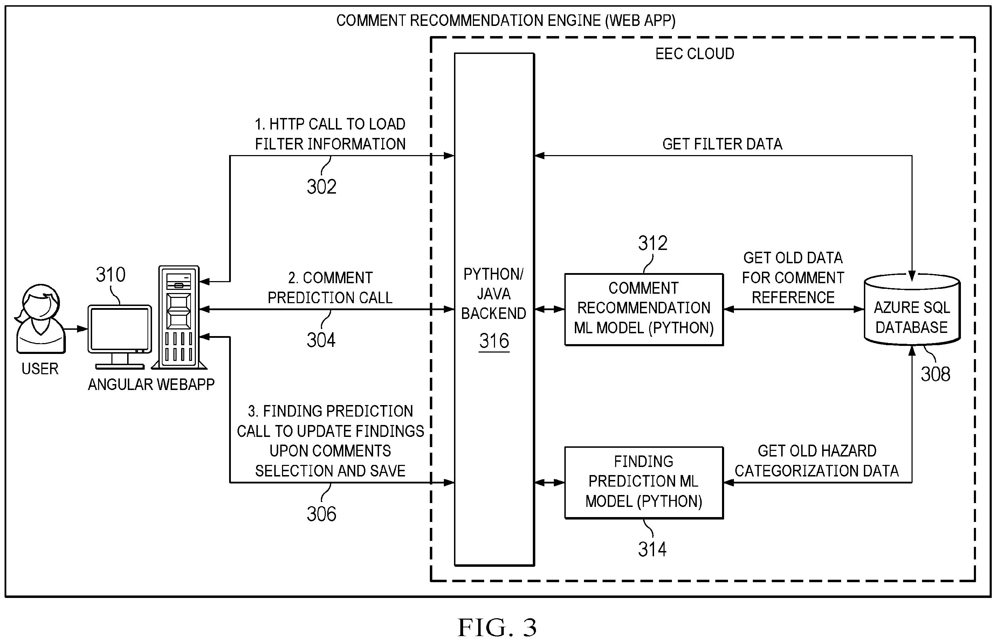

User interface **104** includes a number of entry fields into which a user can enter key data. These include an evaluation category entry field **106,** a task description entry field **108,** a comments entry field **110,** and a findings entry field **112.** In response to a user typing a partial entry of a few (2-3) words into evaluation category entry field **106,** task description entry field **108,** or comments entry field 110, web-based frontend application **102** makes respective application programming interface (API) calls **114** to a Python/JAVA backend **122** (see **Figure 3**). API calls **114** include checklist data population API call **116,** comment prediction API call **118,** and finding prediction API call **120.**

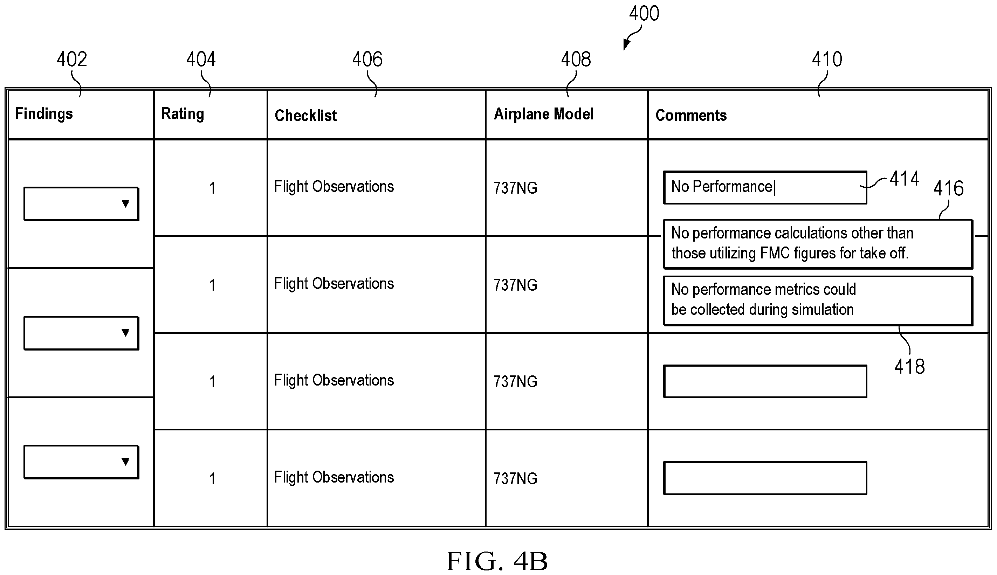

API calls **114** through Python/JAVA backend **122** trigger a first large language model **124** that generates suggested entries to display in the user interface **104** to assist the user in completing the entry (see **Figure 4B**). These suggestions are based on predefined evaluation categories **130,** historical task description data **132,** and historical comment data **134** stored in a database **128** on which the first large language model **124** is trained.

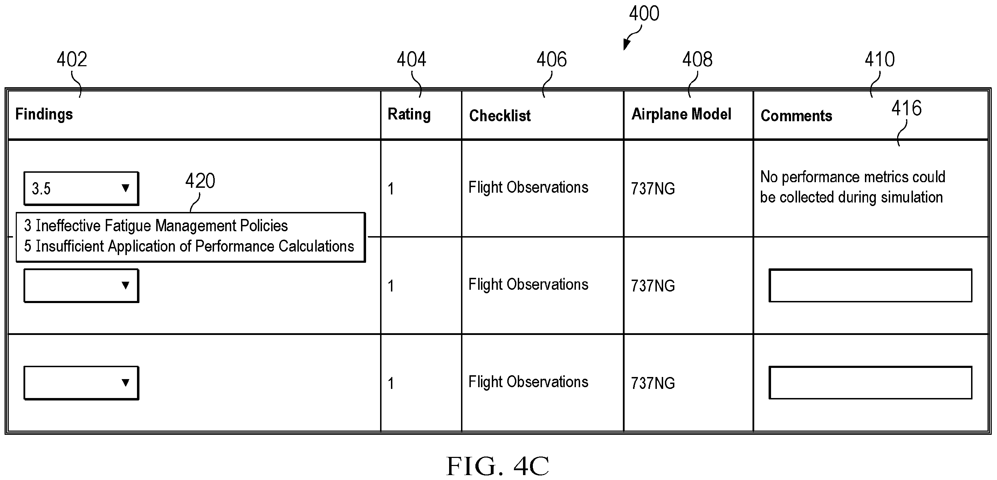

Responsive to an entry in comments entry field **110,** a second large language model **126** generates a number of suggested findings by mapping the comments to historical hazard categorization data **136.** These suggested findings are displayed in user interface **104** for selection and entry into findings entry field **112** (see **Figure 4C**).

Airline evaluation system **100** can be implemented in software, hardware, firmware, or a combination thereof. When software is used, the operations performed by airline evaluation system **100** can be implemented in program code configured to run on hardware, such as a processor unit. When firmware is used, the operations performed by airline evaluation system **100** can be implemented in program code and data and stored in persistent memory to run on a processor unit. When hardware is employed, the hardware can include circuits that operate to perform the operations in airline evaluation system **100.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **150** is a physical hardware system and includes one or more data processing systems. When more than one data processing system is present in computer system **150,** those data processing systems are in communication with each other using a communications medium. The communications medium can be a network. The data processing systems can be selected from at least one of a computer, a server computer, a mobile device such as a tablet computer, or some other suitable data processing system.

As depicted, computer system **150** includes a number of processor units **152** that are capable of executing program code **154** implementing processes in the illustrative examples. As used herein, a processor unit in the number of processor units **152** is a hardware device and is comprised of hardware circuits such as those on an integrated circuit that respond and process instructions and program code that operate a computer. When a number of processor units **152** execute program code **154** for a process, the number of processor units **152** is one or more processor units that can be on the same computer or on different computers. In other words, the process can be distributed between processor units on the same or different computers in a computer system. Further, the number of processor units **152** can be of the same type or different type of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

The illustrative examples provide an automated AI based tool which recommends suggested comments for Safety Team members to select as well as a Finding (Hazard) type as team members begin writing comments for individual checklist items. These recommendations can save considerable time and reduce occurrences of human errors like spelling mistakes or punctuation errors and avoid missing feedback points.

The present solution uses a generative pre-trained transformer (GPT) algorithm to recommend descriptive comments and map a Finding for individual observations. GPT is a powerful natural language processing (NLP) algorithm which learns text data patterns and uses those patterns to write sentences, summarizing text contents, question & answer, and classification. The illustrative examples use two pretrained GPT algorithms which have more than 2 billion parameters. The first algorithm is fine-tuned by using ~1500 AOSS historical data observations (each observation being a small paragraph). This first algorithm learns patterns from historical data and finds the relation among the words/tokens present in AOSS aviation safety data. These patterns help the algorithm to recommend comments in the future as Safety Team members begin typing in their observations. The second GPT pretrained algorithm is fine-tuned using historical data with the additional feature "Comment" to predict the Finding/Harm associated with an observation.

The AOSS team has approximately 400 to 500 predefined checklists/tasks that are given to airlines during evaluation. For each task, an evaluator observes the performance of the airline and provides a Comment for each performed task. After completion of evaluations, the AOSS team starts the activity of mapping (categorizing) Findings/Hazards for each individual performed task based on the given Comment for that task. Comments can be a single sentence or a small paragraph. Writing Comments manually can take considerable time, and there is also the chance of mistakes such as missing Comment points and spelling errors. Hence, the illustrative examples automate the Comment writing by recommending comment phrasing to the evaluator during evaluation and mapping Finding/Hazard.

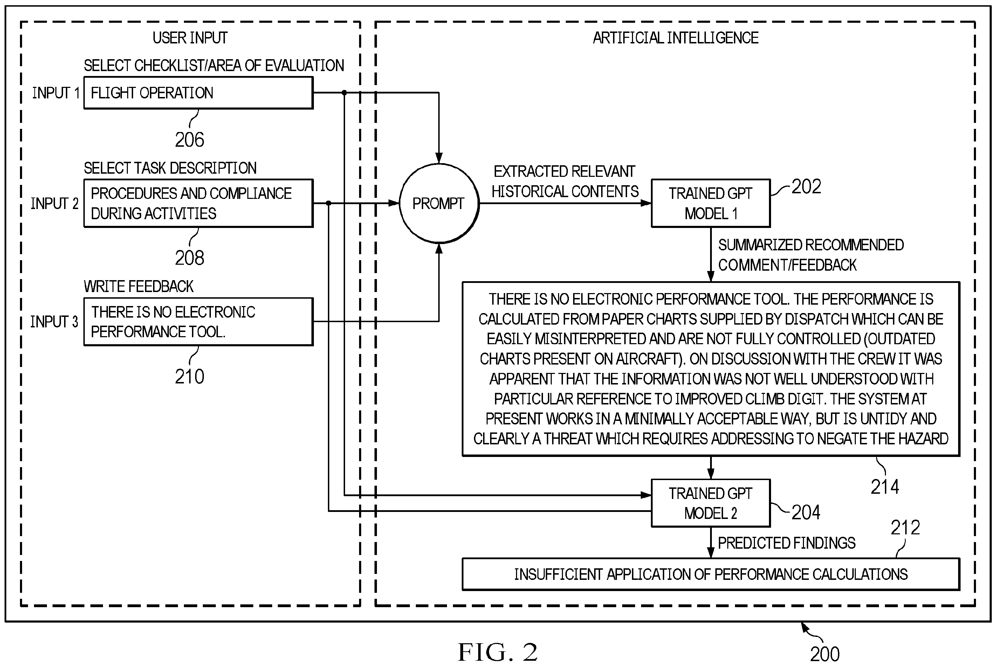

**Figure 2** depicts a diagram illustrating an artificial intelligence architecture evaluation comment recommendation in accordance with an illustrative example. Architecture **200** is an example implementation of airline evaluation system **100** in **Figure 1****.**

Trained GPT Model 1 **202** is a GPT-based algorithm which is trained on historical comment data entered in the past. This algorithm maps the relationship between areas of evaluation, task description, and initial comment input from an evaluation with historical captured comments. When an evaluator starts writing a few words (e.g., 3-4) for the Comment field **210,** Trained GPT Model 1 **202** takes these initial inputs and finds best historical Comments which are contextually similar to the given input and suggests those to evaluator (see **Figure 4B**). Comment **214** is an example suggested comment that Trained GPT Model 1 **202** might find in response to a partial entry of words by a user. The user can select the best recommended comment or enter an alternative comment.

Once comments are selected and entered, Trained GPT Model 2 **204,** which is another GPT-based algorithm trained on historical Comments and Hazards, takes the inputs (Area of Evaluation **206,** Task description **208,** and AI Recommended Feedback/Comment **210**) and categorizes the comment to a type of Hazard/Finding, e.g., finding **212** associated with the elements contained in the comment.

Trained GPT Model 1 **202** uses transformer architecture for training of text data. It takes the three inputs Checklist/Evaluation **206,** Task Description **208,** and Feedback/Comment **210** from historical data. This algorithm tries to find the relationship among words present in a sentence or paragraph and finds significance of a word based on its position in a sentence, which helps algorithm to find the contextual meaning of the sentence or paragraph.

Trained GPT Model 2 **204** also uses a transformer architecture. This model is trained on historical data like Checklist/Evaluation **206,** Task Description **208,** Feedback/Comments **210,** and Hazard/Finding, e.g., **212.** It tries to map the context of the sentence/paragraph with Hazard/finding type. Once it finds the relationship of Comment and Hazard type the relationship is applied to new data to map the Hazard/Finding.

**Figure 3** depicts a diagram illustrating a comment recommendation engine in accordance with an illustrative example. **Figure 3** depicts a high-level architecture diagram of the web application where Frontend application will be communicating with Backend layer over multiple API calls.

The illustrative examples provide a web-based responsive application which can be hosted in a cloud computing system. A frontend interface **310** may employ an Angular15+ framework and interacts with a Python/Java based backend **316** though a number of APIs that communicate to the two GPT Machine Language Models **312** and **314.**

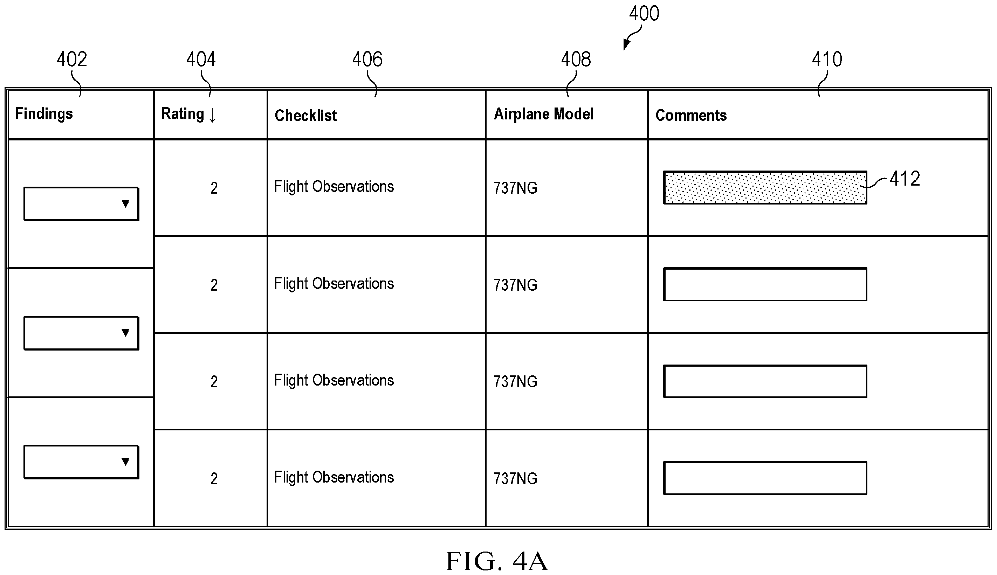

The HTTP API call **302** to load filter information brings all the checklist information from database **308** through backend **316.** Database **308** might comprise an Azure structured query language (SQL) database. This information is shown in frontend interface **310** in a tabular format, wherein each row signifies one evaluation item (see **Figure 4A**). This information is editable by the user to write comments and mapping finding/hazard.

The comment field of each evaluation item comprises an editable text box (see **Figure 4B**). Once a user starts writing a comment for 2-3 words, Comment Prediction API call **304** occurs which will feed all the information of that evaluation item to the Comment Recommendation ML model **312** (equivalent to model **202** in **Figure 2**) and brings back a list of suggested Comments to the frontend interface **310.**

Upon selecting a comment from the suggested list of comments, or entry of an alternate comment manually entered by the user, Finding Prediction API call **306** occurs which takes all the information including the selected/entered comment. Finding Prediction API call **306** feeds this information to Finding Prediction ML model **314** (equivalent to model **204** in **Figure 2**) and retrieves an assigned finding for that evaluation item.

**Figures 4A - 4C** depict a frontend user interface in accordance with an illustrative example. In the present example, frontend user interface **400** includes line items in tabular format that divides categories of entries into different columns including Findings **402,** Rating **404,** Checklist **406,** Airplane Model **408,** and Comments **410.**

In the example shown in **Figure 4A** comments entry field **412** is initially empty. Each row has a respective comments entry field which operates as an intelligent search box.

Once a user starts writing a partial entry **414** (e.g., 2-3 words) in the comments entry field **412,** the Comment Recommendation ML model **312** will assess all other parameters like Rating **404,** Checklist **406,** and Airplane Model **408** and will send back a list of most suitable Recommended Comments **416, 418** for that item. Those Recommended Comments **416, 418** are displayed as selectable options under the comments entry field **412** as shown in **Figure 4B****.** The user will then be able to select an appropriate comment by just clicking on the accurate option. Alternatively, if none of the recommended comments adequately matches what the user wishes to communicate, the user can manually enter an original comment, which can be used to further train the Comment Recommendation ML model **312.**

Once the user chooses the appropriate comment, e.g., **416,** and saves it, another API call is made to get a probable Finding mapped from Finding Prediction ML model **314.** The predicted findings **420** are displayed in the Findings field **402** against that evaluation item as shown in **Figure 4C****.**

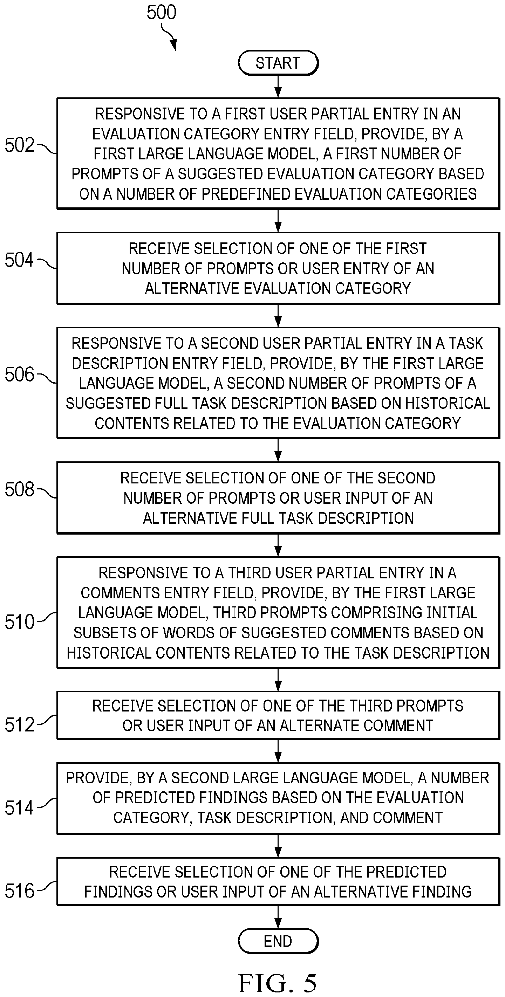

**Figure 5** depicts a flowchart illustrating a process for airline evaluation, comment recommendation, and finding prediction mapping in accordance with an illustrative example. Process **500** can be implemented in airline evaluation system **100** in **Figure 1****.**

Responsive to a first user partial entry in an evaluation category entry field, a first large language model provides a first number of prompts of a suggested evaluation category based on a number of predefined evaluation categories (operation **502**). The predefined evaluation categories include Flight Operations, Simulator Operations, Training Department, Safety Department, Crew Dispatch Department, and Crew Scheduling Department.

The first large language model comprises a generative pre-trained transformer (GPT) algorithm that uses evaluation categories, task descriptions, and comments to find relationships among words present in a sentence or paragraph and determine significance of words based on position in a sentence to find contextual meaning of a sentence or paragraph. The GPT algorithm is integrated with a web-based frontend application with an interface, wherein the interface provides a tabular format with a number of intelligent search fields that trigger a frontend API call in response to entry of a number of words.

The system receives selection of one of the first number of prompts or user entry of an alternative evaluation category (operation **504**).

Responsive to a second user partial entry in a task description entry field, the first large language model provides a second number of prompts of a suggested full task description based on historical contents related to the evaluation category (operation **506**).

The system then receives selection of one of the second number of prompts or user input of an alternative full task description (operation **508**).

Responsive to a third user partial entry in a feedback entry field, the first large language model provides a third prompt comprising an initial subset of words (3 to 4 words) of a suggested comment based on historical contents related to the task description (operation **510**).

The system receives selection of one of the third prompts or user input of an alternate comment (operation **512**). User entries of an alternative evaluation category, alternative full task description, or alternate comment is used to retrain and update the first large language model.

A second large language model provides a number of predicted findings based on the evaluation category, task description, and comment (operation **514**). The second large language model comprises a generative pre-trained transformer (GPT) algorithm that uses evaluation categories, task descriptions, and comments from the first large language model or manually entered comments from the user to map contexts of sentences and paragraphs to types of findings.

The system receives selection of one of the predicted findings or user input of an alternative finding (operation **516**). user input of an alternate finding is used to retrain and update the second large language model. Process **500** then ends.

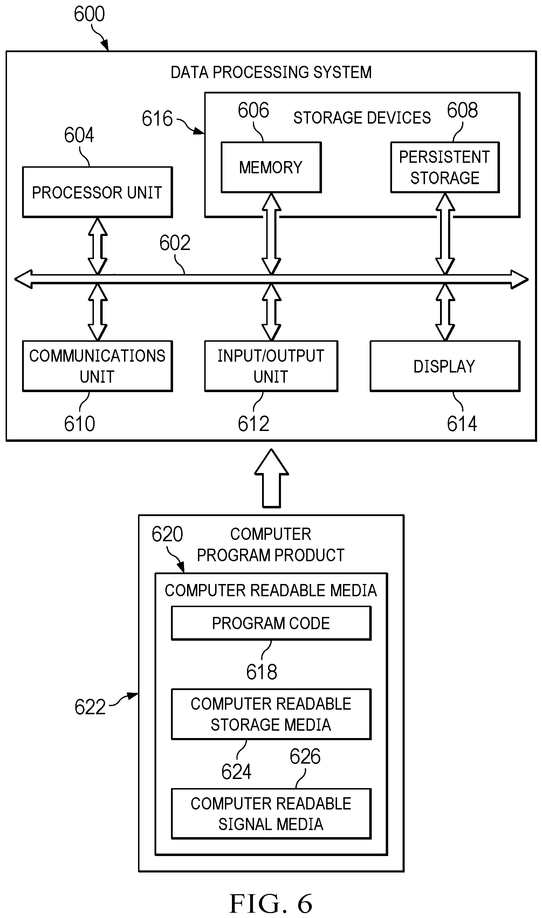

Turning now to **Figure 6****,** an illustration of a block diagram of a data processing system is depicted in accordance with an illustrative example. Data processing system **600** may be used to implement computer system **150** in **Figure 1****.** In this illustrative example, data processing system **600** includes communications framework **602,** which provides communications between processor unit **604,** memory **606,** persistent storage **608,** communications unit **610,** input/output (I/O) unit **612,** and display **614.** In this example, communications framework **602** takes the form of a bus system.

Processor unit **604** serves to execute instructions for software that may be loaded into memory **606.** Processor unit **604** may be a number of processors, a multi-processor core, or some other type of processor, depending on the particular implementation. In an example, processor unit **604** comprises one or more conventional general-purpose central processing units (CPUs). In an alternate example, processor unit **604** comprises one or more graphical processing units (GPUs).

Memory **606** and persistent storage **608** are examples of storage devices **616.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **616** may also be referred to as computer-readable storage devices in these illustrative examples. Memory **606,** in these examples, may be, for example, a random access memory or any other suitable volatile or non-volatile storage device. Persistent storage **608** may take various forms, depending on the particular implementation.

For example, persistent storage **608** may contain one or more components or devices. For example, persistent storage **608** may be a hard drive, a flash memory, a rewritable optical disk, a rewritable magnetic tape, or some combination of the above. The media used by persistent storage **608** also may be removable. For example, a removable hard drive may be used for persistent storage **608.** Communications unit **610,** in these illustrative examples, provides for communications with other data processing systems or devices. In these illustrative examples, communications unit **610** is a network interface card.

Input/output unit **612** allows for input and output of data with other devices that may be connected to data processing system **600.** For example, input/output unit **612** may provide a connection for user input through at least one of a keyboard, a mouse, or some other suitable input device. Further, input/output unit **612** may send output to a printer. Display **614** provides a mechanism to display information to a user.

Instructions for at least one of the operating system, applications, or programs may be located in storage devices **616,** which are in communication with processor unit **604** through communications framework **602.** The processes of the different examples may be performed by processor unit **604** using computer-implemented instructions, which may be located in a memory, such as memory **606.**

These instructions are referred to as program code, computer-usable program code, or computer-readable program code that may be read and executed by a processor in processor unit **604.** The program code in the different examples may be embodied on different physical or computer-readable storage media, such as memory **606** or persistent storage **608.**

Program code **618** is located in a functional form on computer-readable media **620** that is selectively removable and may be loaded onto or transferred to data processing system **600** for execution by processor unit **604.** Program code **618** and computer-readable media **620** form computer program product **622** in these illustrative examples. In one example, computer-readable media **620** may be computer-readable storage media **624** or computer-readable signal media **626.**

In these illustrative examples, computer-readable storage media **624** is a physical or tangible storage device used to store program code **618** rather than a medium that propagates or transmits program code **618.** Computer readable storage media **624,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code **618** may be transferred to data processing system **600** using computer-readable signal media **626.** Computer-readable signal media **626** may be, for example, a propagated data signal containing program code **618.** For example, computer-readable signal media **626** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **600** are not meant to provide architectural limitations to the manner in which different examples may be implemented. The different illustrative examples may be implemented in a data processing system including components in addition to or in place of those illustrated for data processing system **600.** Other components shown in **Figure 6** can be varied from the illustrative examples shown. The different examples may be implemented using any hardware device or system capable of running program code **618.**

Further examples are set out in the clauses below:
1. A computer-implemented method for airline evaluation, comment recommendation, and finding prediction mapping, the method comprising:
   using a number of processors to perform:
   responsive to a first user partial entry in an evaluation category entry field, providing, by a first large language model, a first number of prompts of a suggested evaluation category based on a number of predefined evaluation categories;
   receiving selection of one of the first number of prompts or user entry of an alternative evaluation category;
   responsive to a second user partial entry in a task description entry field, providing, by the first large language model, a second number of prompts of a suggested full task description based on historical contents related to the evaluation category;
   receiving selection of one of the second number of prompts or user input of an alternative full task description;
   responsive to a third user partial entry in a comments entry field, providing, by the first large language model, third prompts comprising initial subsets of words of suggested comments based on historical contents related to the task description;
   receiving selection of one of the third prompts or user input of an alternate comment;
   providing, by a second large language model, a number of predicted findings based on the evaluation category, task description, and comment; and
   receiving selection of one of the predicted findings or user input of an alternative finding.
2. The method of clause 1, wherein the predefined evaluation categories include:
   Flight Operations;
   Simulator Operations;
   Training Department;
   Safety Department;
   Crew Dispatch Department; and
   Crew Scheduling Department.
3. The method of clause 1 or 2, wherein the first large language model comprises a generative pre-trained transformer (GPT) algorithm that uses evaluation categories, task descriptions, and comments to find
   relationships among words present in a sentence or
   paragraph and determine significance of words based on position in a sentence to find contextual meaning of a sentence or paragraph.
4. The method of clause 3, wherein the GPT algorithm is integrated with a web-based frontend application with an interface, wherein the interface provides a tabular format with a number of intelligent search fields that trigger a frontend application programming interface call in response to entry of a number of words.
5. The method of clause 1, wherein the second large language model comprises a generative pre-trained transformer (GPT) algorithm that uses evaluation categories, task descriptions, and comments from the first large language model or manually entered comments from the user to map contexts of sentences and paragraphs to types of findings.
6. The method of any one of the preceding clauses, wherein user entries of an alternative evaluation category, alternative full task description, or alternate comment is used to retrain and update the first large language model.
7. The method of any one of the preceding clauses, wherein user input of an alternate finding is used to retrain and update the second large language model.
8. The method of any one of the preceding clauses, wherein the initial subset of words of a suggested comment comprises 3 to 4 words.
9. A system for airline evaluation, comment recommendation, and finding prediction mapping, the system comprising:
   a storage device that stores program instructions;
   one or more processors operably connected to the storage device and configured to execute the program instructions to cause the system to:
      responsive to a first user partial entry in an evaluation category entry field, provide, by a first large language model, a first number of prompts of a suggested evaluation category based on a number of predefined evaluation categories;
      receive selection of one of the first number of prompts or user entry of an alternative evaluation category;
      responsive to a second user partial entry in a task description entry field, provide, by the first large language model, a second number of prompts of a suggested full task description based on historical contents related to the evaluation category;
      receive selection of one of the second number of prompts or user input of an alternative full task description;
      responsive to a third user partial entry in a comments entry field, provide, by the first large language model,
      third prompts comprising initial subsets of words of suggested comments based on historical contents related to the task description;
      receive selection of one of the third prompts or user input of an alternate comment;
      provide, by a second large language model, a number of predicted findings based on the evaluation category, task description, and comment; and
      receive selection of one of the predicted findings or
      user input of an alternative finding.
10. The system of clause 9, wherein the predefined evaluation categories include:
   Flight Operations;
   Simulator Operations;
   Training Department;
   Safety Department;
   Crew Dispatch Department; and
   Crew Scheduling Department.
11. The system of clause 9, wherein the first large language model comprises a generative pre-trained transformer (GPT) algorithm that uses evaluation categories, task descriptions, and comments to find relationships among words present in a sentence or paragraph and determine significance of words based on position in a sentence to find contextual meaning of a sentence or paragraph.
12. The system of clause 11, wherein the GPT algorithm is integrated with a web-based frontend application with an interface, wherein the interface provides a tabular format with a number of intelligent search fields that trigger a frontend application programming interface call in response to entry of a number of words.
13. The system of clause 9, wherein the second large language model comprises a generative pre-trained transformer (GPT) algorithm that uses evaluation categories, task descriptions, and comments from the first large language model or manually entered comments from the user to map contexts of sentences and paragraphs to types of findings.
14. The system of any one of clauses 9-13, wherein user entries of an alternative evaluation category, alternative full task description, or alternate comment is used to retrain and update the first large language model.
15. The system of any one of clauses 9-14, wherein user input of an alternate finding is used to retrain and update the second large language model.
16. The system of any one of clauses 9-15, wherein the initial subset of words of a suggested comment comprises 3 to 4 words.
17. A computer program product for airline evaluation, comment recommendation, and finding prediction mapping, the computer program product comprising:
   a computer-readable storage medium having program instructions embodied thereon to perform the operations of:
   responsive to a first user partial entry in an evaluation category entry field, providing, by a first large language model, a first number of prompts of a suggested evaluation category based on a number of predefined evaluation categories;
   receiving selection of one of the first number of prompts or user entry of an alternative evaluation category; responsive to a second user partial entry in a task description entry field, providing, by the first large language model, a second number of prompts of a suggested full task description based on historical contents related to the evaluation category;
   receiving selection of one of the second number of prompts or user input of an alternative full task description;
   responsive to a third user partial entry in a comments entry field, providing, by the first large language model, third prompts comprising initial subsets of words of suggested comments based on historical contents related to the task description;
   receiving selection of one of the third prompts or user input of an alternate comment;
   providing, by a second large language model, a number of predicted findings based on the evaluation category, task description, and comment; and
   receiving selection of one of the predicted findings or user input of an alternative finding.
18. The computer program product of clause 17, wherein the predefined evaluation categories include:
   Flight Operations;
   Simulator Operations;
   Training Department;
   Safety Department;
   Crew Dispatch Department; and
   Crew Scheduling Department.
19. The computer program product of clause 17, wherein the first large language model comprises a generative pre-trained transformer (GPT) algorithm that uses evaluation categories, task descriptions, and comments to find relationships among words present in a sentence or paragraph and determine significance of words based on position in a sentence to find contextual meaning of a sentence or paragraph.
20. The computer program product of clause 17, wherein the second large language model comprises a generative pre-trained transformer (GPT) algorithm that uses evaluation categories, task descriptions, and comments from the first large language model or manually entered comments from the user to map contexts of sentences and paragraphs to types of findings.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of different types of networks" is one or more different types of networks. In illustrative example, a "set of" as used with reference items means one or more items. For example, a set of metrics is one or more of the metrics.

The description of the different illustrative examples has been presented for purposes of illustration and description and is not intended to be exhaustive or limited to the examples in the form disclosed. The different illustrative examples describe components that perform actions or operations. In an illustrative example, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A computer-implemented method for airline evaluation, comment recommendation, and finding prediction mapping, the method comprising:
using a number of processors to perform:
responsive to a first user partial entry in an evaluation category entry field (106), providing (502), by a first large language model (124), a first number of prompts of a suggested evaluation category based on a number of predefined evaluation categories (130);
receiving (504) selection of one of the first number of prompts or user entry of an alternative evaluation category;
responsive to a second user partial entry in a task description entry field (108), providing (506), by the first large language model, a second number of prompts of a suggested full task description based on historical contents (132) related to the evaluation category;
receiving (508) selection of one of the second number of prompts or user input of an alternative full task description;
responsive to a third user partial entry in a comments entry field (110), providing (510), by the first large language model, third prompts comprising initial subsets of words of suggested comments based on historical contents (134) related to the task description;
receiving (512) selection of one of the third prompts or user input of an alternate comment;
providing (514), by a second large language model (126), a number of predicted findings based on the evaluation category, task description, and comment; and
receiving (516) selection of one of the predicted findings or user input of an alternative finding.

2. The method of claim 1, wherein the predefined evaluation categories include:
Flight Operations;
Simulator Operations;
Training Department;
Safety Department;
Crew Dispatch Department; and
Crew Scheduling Department.

3. The method of claim 1 or 2, wherein the first large language model comprises a generative pre-trained transformer (GPT) algorithm that uses evaluation categories, task descriptions, and comments to find relationships among words present in a sentence or paragraph and determine significance of words based on position in a sentence to find contextual meaning of a sentence or paragraph.

4. The method of claim 3, wherein the GPT algorithm is integrated with a web-based frontend application (102) with an interface (104), wherein the interface provides a tabular format with a number of intelligent search fields that trigger a frontend application programming interface call in response to entry of a number of words.

5. The method of any one of the preceding claims, wherein the second large language model comprises a generative pre-trained transformer (GPT) algorithm that uses evaluation categories, task descriptions, and comments from the first large language model or manually entered comments from the user to map contexts of sentences and paragraphs to types of findings.

6. The method of any one of the preceding claims , wherein user entries of an alternative evaluation category, alternative full task description, or alternate comment is used to retrain and update the first large language model.

7. The method of any one of the preceding claims , wherein user input of an alternate finding is used to retrain and update the second large language model.

8. The method of any one of the preceding claims , wherein the initial subset of words of a suggested comment comprises 3 to 4 words.

9. A system for airline evaluation, comment recommendation, and finding prediction mapping, the system comprising:
a storage device (616) that stores program instructions;
one or more processors (604) operably connected to the storage device and configured to execute the program instructions to cause the system to:
responsive to a first user partial entry in an evaluation category entry field (106), provide (502), by a first large language model (124), a first number of prompts of a suggested evaluation category based on a number of predefined evaluation categories (130);
receive (504) selection of one of the first number of prompts or user entry of an alternative evaluation category;
responsive to a second user partial entry in a task description entry field (108), provide (506), by the first large language model, a second number of prompts of a suggested full task description based on historical contents (132) related to the evaluation category;
receive (508) selection of one of the second number of prompts or user input of an alternative full task description;
responsive to a third user partial entry in a comments entry field (110), provide (510), by the first large language model, third prompts comprising initial subsets of words of suggested comments based on historical contents (134) related to the task description;
receive (512) selection of one of the third prompts or user input of an alternate comment;
provide (514), by a second large language model (126), a number of predicted findings based on the evaluation category, task description, and comment; and
receive (516) selection of one of the predicted findings or user input of an alternative finding.

10. The system of claim 9, wherein the predefined evaluation categories include:
Flight Operations;
Simulator Operations;
Training Department;
Safety Department;
Crew Dispatch Department; and
Crew Scheduling Department.

11. The system of claim 9 or 10, wherein the first large language model comprises a generative pre-trained transformer (GPT) algorithm that uses evaluation categories, task descriptions, and comments to find relationships among words present in a sentence or paragraph and determine significance of words based on position in a sentence to find contextual meaning of a sentence or paragraph.

12. The system of claim 11, wherein the GPT algorithm is integrated with a web-based frontend application (102) with an interface (104), wherein the interface provides a tabular format with a number of intelligent search fields that trigger a frontend application programming interface call in response to entry of a number of words.

13. The system of claim 9, wherein the second large language model comprises a generative pre-trained transformer (GPT) algorithm that uses evaluation categories, task descriptions, and comments from the first large language model or manually entered comments from the user to map contexts of sentences and paragraphs to types of findings; or optionally
wherein user entries of an alternative evaluation category, alternative full task description, or alternate comment is used to retrain and update the first large language model; or optionally
wherein user input of an alternate finding is used to retrain and update the second large language model; or optionally
wherein the initial subset of words of a suggested comment comprises 3 to 4 words.

14. A computer program product for airline evaluation, comment recommendation, and finding prediction mapping, the computer program product comprising:
a computer-readable storage medium (624) having program instructions embodied thereon to perform the operations of:
responsive to a first user partial entry in an evaluation category entry field (106), providing (502), by a first large language model, a first number of prompts of a suggested evaluation category based on a number of predefined evaluation categories (130);
receiving (504) selection of one of the first number of prompts or user entry of an alternative evaluation category;
responsive to a second user partial entry in a task description entry field (108), providing (506), by the first large language model, a second number of prompts of a suggested full task description based on historical contents related to the evaluation category (132);
receiving (508) selection of one of the second number of prompts or user input of an alternative full task description;
responsive to a third user partial entry in a comments entry field (110), providing (510), by the first large language model, third prompts comprising initial subsets of words of suggested comments based on historical contents (134) related to the task description;
receiving (512) selection of one of the third prompts or user input of an alternate comment;
providing (514), by a second large language model (126), a number of predicted findings based on the evaluation category, task description, and comment; and
receiving (516) selection of one of the predicted findings or user input of an alternative finding.

15. The computer program product of claim 14, wherein the predefined evaluation categories include:
Flight Operations;
Simulator Operations;
Training Department;
Safety Department;
Crew Dispatch Department; and
Crew Scheduling Department; or optionally
wherein the first large language model comprises a generative pre-trained transformer (GPT) algorithm that uses evaluation categories, task descriptions, and comments to find relationships among words present in a sentence or paragraph and determine significance of words based on position in a sentence to find contextual meaning of a sentence or paragraph; or optionally
wherein the second large language model comprises a generative pre-trained transformer (GPT) algorithm that uses evaluation categories, task descriptions, and comments from the first large language model or manually entered comments from the user to map contexts of sentences and paragraphs to types of findings.
